# EUROPÄISCHE PATENTSCHRIFT

(11) **EP 2 100 780 B1**
(45) Veröffentlichungstag und Bekanntmachung des Hinweises auf die Patenterteilung: **11.05.2011**
(21) Anmeldenummer: 09155002.0
(22) Anmeldetag: 12.03.2009
(51) Int. Cl.: B60R 21/13

(54) **Ausfahrbarer Überrollschutz**
Extendable anti-roll guard
Système de protection contre les tonneaux avec un arceau extensible

(30) Priorität: 13.03.2008 DE 102008000661
(43) Veröffentlichungstag der Anmeldung: 16.09.2009
(73) Patentinhaber: Alutech Gesellschaft m.b.H., 5651 Lend (AT)
(72) Erfinder: Garnweidner, Peter, 5112, Lamprechtshausen (AT); Danninger, Christian, 5204, Straßwalchen (AT)
(74) Vertreter: Wilhelms · Kilian & Partner Patentanwälte

(56) Entgegenhaltungen:
- DE-A1- 4 342 401
- DE-A1- 19 501 522
- DE-U1- 8 505 101
- US-A- 5 492 430

## Beschreibung

Die Erfindung betrifft einen ausfahrbaren Überrollschutz für ein Kraftfahrzeug gemäß Oberbegriff des Patentanspruches 1. Ein solcher Überrollschutz gemäß dem Oberbegriff des Patentanspruches 1 ist aus DE4342401 A1 bekannt.

Überrolschutzvorrichtungen, im Folgenden als Überrollbügel bezeichnet, sind bekannt und werden in Kraftfahrzeugen, wie z. B. Cabriolets, verwendet, um Insassen des Kraftfahrzeuges vor Kopfverletzungen im Falle eines Fahrzeugüberschlages zu schützen. Aus DE 43 42 401 A1 und DE 195 23 790 A1 ist es bekannt, Überrollbügel mit vorgespannten Federelementen auszustatten, die durch einen von einem Crashsensor angesteuerten Auslösemechanismus, wie z. B. einen Elektromagneten oder eine pyrotechnische Patrone, den Überrollbügel zum Schutz der Insassen des Fahrzeuges ausfahren.

Für eine Feststellung bzw. Verriegelung des ausgefahrenen Überrollbügels sind verschiedene Arten von Verriegelungsmechanismen bekannt. Gemäß DE 197 50 457 A1 wird eine Zahnstange in Längsrichtung des Überrollbügels befestigt, in die eine Verriegelungsklinke eingreift und nach dem Ausfahren verhindert, dass der Überrollbügel wieder eingefahren wird.

Aus der deutschen Offenlegungsschrift DE 195 01 522 A ist weiterhin eine Überrollschutzvorrichtung, bei der ein Einfahren eines ausgelösten Überrollbügels durch Ausbildung eines Formschlusses zwischen dem Überrollbügel und einem Tellerfederpaket verhindert wird, bekannt.

Eine weitere Möglichkeit zur Verriegelung des Überrollbügels ist die Verwendung eines Kugelschlosses. DE 43 42 401 A1 offenbart einen ausfahrbaren Überrollbügel, der stufenlos festgestellt werden kann, indem Verriegelungskugeln in einen sich verjüngenden Abschnitt zwischen das ausgefahrene Bügelrohr des Überrollbügels und dessen Führung, wenn versucht wird, den Überrollbügel wieder einzufahren, gedrückt werden.

Nachteil der bekannten Verriegelungsmechanismen ist, dass bei Verwendung einer Zahnstange mit einer Verriegelungsklinke, die Verriegelungsklinke mit einer gewissen Anzahl an Zähnen in die Zahnstange eingreifen muss, um eine sichere Verriegelung des ausgefahrenen Überrollbügels zu gewährleisten. Ist dies nicht der Fall, z. B. bei einer Fehlfunktion in Form eines langsamen Ausfahrens des Überrollbügels, kann die Verriegelung unter Umständen nicht ausreichen und der Überrollbügel bei zu hoher Belastung wieder eingefahren werden.

Der in DE 43 42 401 A1 vorgeschlagene Verriegelungsmechanismus weist den großen Nachteil auf, dass über die Verriegelungskugeln die für eine sichere Verriegelung benötigte Klemmkraft nur schlecht und bei weicheren Materialien des Bügelrohres bzw. der Kugeln nicht erreicht wird. Grund hierfür ist, dass die Anlage der Verriegelungskugeln nur punktförmig ist und nicht genug Kraft über die punktförmige Anlage auf den Überrollkörper übertragbar ist.

Es ist daher Aufgabe der Erfindung, einen Überrollbügel mit einem verbesserten Verriegelungsmechanismus, der stufenlos feststellbar ist, zu schaffen.

Diese Aufgabe wird mit einem Überrollbügel mit den Merkmalen des Patentanspruches 1 gelöst.

Vorzugsweise weist der erfindungsgemäße Überrollbügel Keile auf, die in einen sich verjüngenden Abschnitt in der Führung des Überrollbügels eingesetzt sind. Vorteilhaft an dieser Ausgestaltung ist, dass die Keile eine dem Überrollbügel zugewandte Fläche aufweisen, über die im Verriegelungszustand der Kraftschluss, d.h. das Verklemmen, zwischen dem Überrollbügel und dem sich verjüngenden Abschnitt gebildet wird. Über die flächige Anlage der Keile an dem Überrollbügel kann eine ausreichende Klemmkraft, die eine sichere Verriegelung des Überrollbügels sicherstellt, erzeugt werden.

Bevorzugte Ausführungen und Weiterbildungen des erfindungsgemäßen Überrollschutzes sind Gegenstand der Unteransprüche.

Im Folgenden werden bevorzugte Ausführungsformen des erfindungsgemäßen Überrollschutzes unter Bezug auf die beigefügten Zeichnungen erläutert.
Fig. 1 zeigt einen erfindungsgemäßen Überrollschutz in einer Schnittansicht,
Fig. 2 den erfindungsgemäßen Überrollschutz in einer Phantomzeichnung, in der die Schnittlinien der in Fig. 3 und 4 gezeigten Schnittansichten dargestellt sind,
Fig. 3 eine Schnittansicht entlang der Schnittlinie A-A aus Fig. 2,
Fig. 4 eine Schnittansicht entlang der Schnittlinie B-B aus Fig. 2 und
Fig. 5 den erfindungsgemäßen Überrollschutz in einem ausgefahrenen Zustand.
Fig. 6 zeigt eine Phantomzeichnung eines erfindungsgemäßen Überrollschutzes in einer zweiten Ausführungsform,
Fig. 7 eine Schnittansicht des erfindungsgemäßen Überrollschutzes in der zweiten Ausführungsform entlang der in Fig. 6 dargestellten Schnittlinie C-C,
Fig. 8 eine Schnittansicht entlang der in Fig. 6 dargestellten Schnittlinie D-D und
Fig. 9 eine vergrößerte Darstellung des Verriegelungsmechanismus des erfindungsgemäßen Überrollschutzes in der zweiten Ausführungsform.
Fig. 10 bis 13 zeigen einen Überrollschutz einer dritten bevorzugten Ausführungsform, wobei Fig. 12 eine Schnittansicht entlang der Schnittlinie D-D aus Fig. 10 zeigt.
Fig. 14 bis 16 zeigen den Überrollschutz gemäß der dritten bevorzugten Ausführungsform in einem aufgefahrenen Zustand.

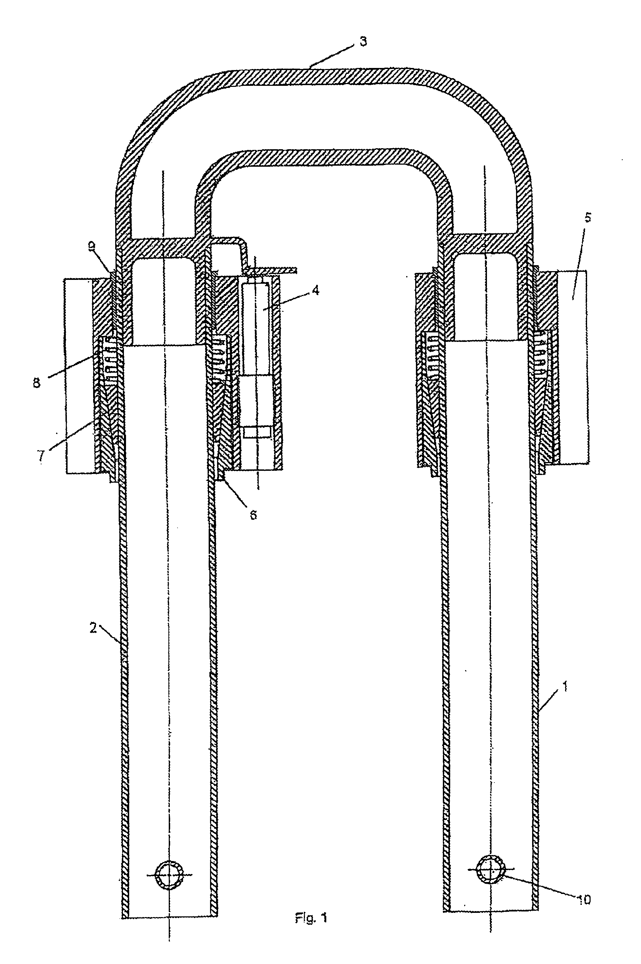

Fig. 1 zeigt einen erfindungsgemäßen Überrollschutz, der im Folgenden als Überrollbügel bezeichnet wird. Der Überrollbügel besitzt einen Überrollkörper, der, wie aus der in Fig. 1 gezeigten Schnittansicht ersichtlich, aus zwei Bügelrohren 1, 2 und einem Querbügel 3 besteht. Der Überrollkörper ist in der dargestellten Ausführungsform folglich aus drei Elementen aufgebaut, kann aber auch aus einem einzigen Element gebildet sein. Außerdem können alle Elemente, d. h. die Bügelrohre 1, 2 und der Querbügel 3, die gleiche Wandstärke aufweisen. Je nach Beanspruchung und Richtung der aufzunehmenden Kräfte können die Bügelrohre und der Querbügel 3 aus unterschiedlichen oder gleichen Materialien hergestellt sein. Hierfür sind vorzugsweise Metalle, wie z. B. Aluminium, Magnesium oder Metalllegierungen, wie z. B. eine Magnesium- bzw. Aluminiumlegierung oder Stahl, geeignet. Es können aber auch Kunststoffe, wie z.B. Carbon oder andere Faserverbundwerkstoffe, die die benötigten mechanischen Eigenschaften aufweisen, verwendet werden. Diese Materialkombinationen sind für alle im Folgenden beschriebenen Ausführungsformen wählbar.

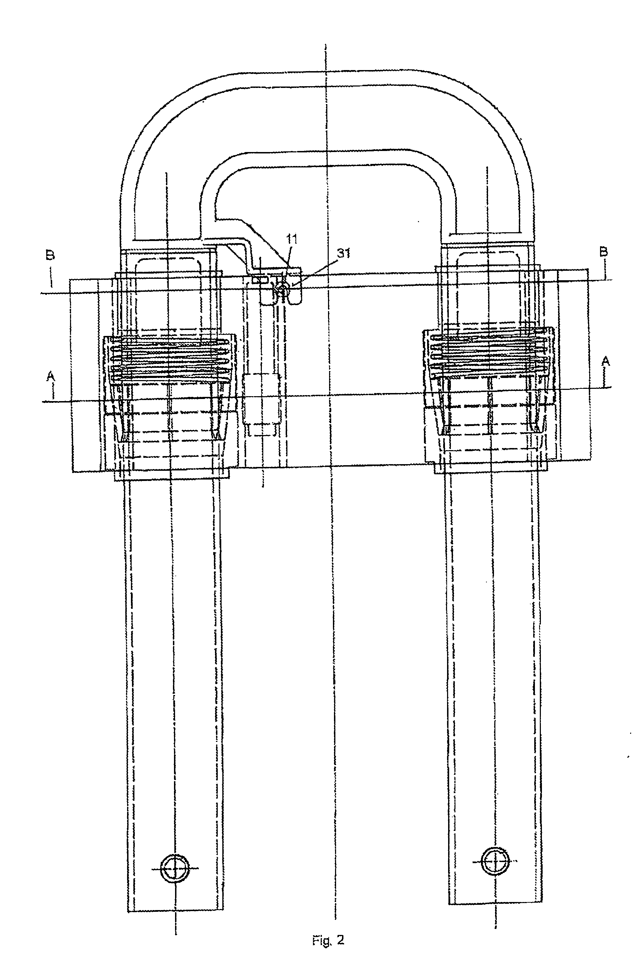

Der in Fig. 1 gezeigte und unter Bezug auf die Fig. 2 bis 5 erläuterte Überrollbügel ist sitzbezogen, d. h. hinter einer Sitzposition eines Insassen eines Kraftfahrzeuges angeordnet, und schützt den Insassen vor Kopfverletzungen. Es ist jedoch auch möglich, auf jeder Seite des Fahrzeuges ein Bügelrohr 1, 2 anzuordnen und den Querbügel 3 so zu dimensionieren, dass er über die vollständige Kraftfahrzeugbreite reicht, und der Überrollbügel alle in dem Fahrzeug sitzenden Insassen vor Kopfverletzungen schützt. Darüber hinaus muss der Querbügel 3 nicht zwingend von zwei Bügelrohren gehaltert werden, sondern kann auch nur mit einem Bügelrohr verbunden sein, wodurch der gesamte Überrollkörper eine T-Form erhält.

Zur Befestigung des Überrollkörpers an einem Fahrzeug, sind Aufnahmen 5 vorgesehen, die einerseits mit dem jeweiligen Fahrzeug fest verbunden sind und in denen andererseits die Bügelrohre 1, 2 entlang ihrer Längsachse verschiebbar sind.

In die Führungen 5 können Führungsbuchsen 9 eingesetzt sein, die Fertigungstoleranzen der Bügelrohre 1, 2 bzw. der Führungen 5 ausgleichen. Hierdurch wird ein Verklemmen der Bügelröhre erfolgreich verhindert.

Innerhalb der Führungen 5 ist ein Verriegelungsmechanismus vorhanden, der den Überrollbügel nach dem Ausfahren verriegelt und folglich ein Einfahren des Überrollbügels verhindert. Dieser Verriegelungsmechanismus umfasst, wie in Fig. 1 gezeigt, ein sich konisch verjüngendes Element 6, das entweder in den Führungen 5 selbst gebildet ist, oder in diese in Form einer Hülse 6 über ein Gewinde eingeschraubt ist. Die Hülse 6 verjüngt sich entgegengesetzt zu der Ausfahrrichtung des Überrollbügels und bildet an ihrem unteren Ende einen Spalt mit den Bügelrohren 1, 2 aus. In den zwischen der Hülse 6 und den Bügelrohren 1, 2 gebildeten Abschnitt sind Keile 7 eingesetzt, die mit ihrer Innenseite an den Bügelrohren 1, 2 anliegen und deren Außenseite die gleiche Steigung wie die des sich verjüngenden Abschnitts 6 aufweist. Die Steigung des Keils und des Elements 6 können aber auch unterschiedlich sein, wodurch der Keil 7 nicht an dem Bügelrohr anliegt, aber die gleiche technische Wirkung, die später beschrieben wird, aufweist. Die Außenseite der Keile, die an dem sich verjüngenden Abschnitt anliegt, muss nicht zwingend, wie in der Ausführungsform gezeigt, einen geradlinigen Verlauf aufweisen, sondern kann sowohl konvex als auch konkav ausgebildet sein. In diesem Fall bildet das sich verjüngende Element 6 einen der Außenseite der Keile 7 entsprechenden konkaven bzw. konvexen Verlauf. Weiterhin ist in den Abschnitt ein Federelement 8, z. B. eine Schraubenfeder, eingesetzt, das sich am Ende der Führung 5 abstützt und die Keile 7 in den sich durch die Hülse 6 verjüngenden Abschnitt drückt. Durch das Federelement 8 haben die Keile 7 kein Spiel und erzeugen keine störenden Geräusche, wie z. B. Klappern, während der Fahrt.

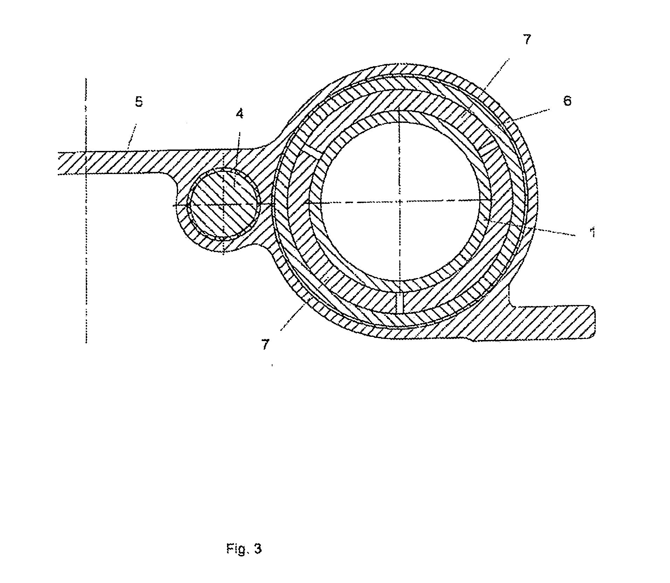

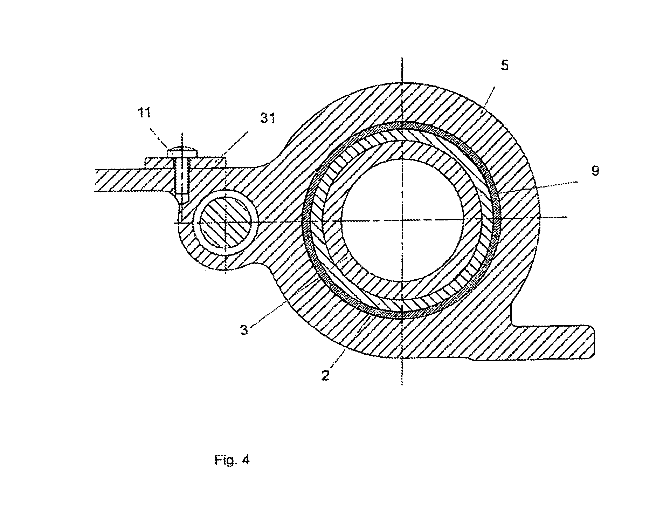

In Fig. 2 ist der erfindungsgemäße Überrollbügel in einer Phantomzeichnung dargestellt, in der die Schnittlinien der in Fig. 3 und 4 dargestellten Schnittansichten enthalten sind.

Fig. 3 zeigt die Schnittansicht entlang der Schnittlinie A-A, aus der ersichtlich ist, dass die Bügelrohre 1, 2 und die Hülsen 6 einen kreisförmigen Querschnitt aufweisen und zwischen diese die Keile 7 gesetzt sind. Der Querschnitt der Keile 7 ist derart gewählt, das sie einen Kreisabschnitt des kreisförmigen Zwischenraums einnehmen, wobei zwischen zwei aneinander grenzenden Keile ein Spalt für die richtige Funktionsweise des Verriegelungsmechanismus gebildet ist.

In Fig. 4 ist eine Schnittansicht entlang der Schnittlinie B-B aus Fig. 2 dargestellt, aus der in Kombination mit Fig. 2 hervorgeht, dass der auszufahrende Überrollkörper mit einem Abschnitt 31 des Querbügels und einer Schraube 11 mit einer der Führungen 5 verbunden ist. Diese Verbindung ist vorgesehen, damit der Überrollbügel während der Fahrt ortsfest bleibt und nicht durch Schläge auf das Fahrzeug, z. B. bei Bodenwellen, in seiner Stellung verändert wird.

Im Folgenden wird eine Funktionsweise des Überrollschutzes und insbesondere des Verriegelungsmechanismus erläutert. Falls ein Schutz der Köpfe der Insassen benötigt wird, z. B. bei einem Überschlag des Fahrzeuges, muss der Überrollbügel ausgefahren werden. Dies wird durch einen Aktor 4, der in einer der beiden Führungen 5 vorgesehen ist, bewerkstelligt. Dieser Aktor 4 ist in der erläuterten Ausführungsform ein pyrotechnischer Aktor mit Druckstößel, der über einen Crashsensor angesteuert wird. Als Aktor können aber auch vorgespannte Federsysteme der eingangs erläuterten Art zum Einsatz kommen.

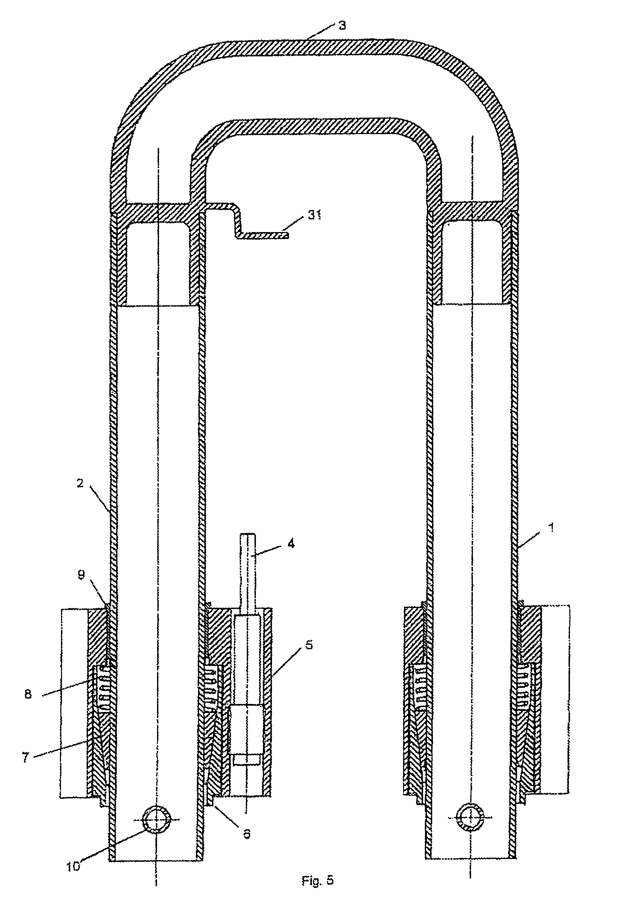

Der Druckstößel des pyrotechnischen Aktors 4 liegt an dem Abschnitt 31 des Querbügels, wie in Fig. 1 und 2 gezeigt, an und übt bei Auslösung des pyrotechnischen Aktors auf den Abschnitt 31 und folglich auf den Überrollkörper Kraft aus, wodurch dieser in die in Fig. 5 gezeigte ausgefahrene Stellung versetzt wird. Bei diesem Vorgang wird die

Klemmverbindung zwischen der Schraube 11 und dem Abschnitt 31 gelöst. Dies wird ermöglicht, indem die Durchführung in dem Abschnitt 31 für die Schraube 11 nach unten, wie in Fig. 2 gezeigt, nicht geschlossen ist und der pyrotechnische Aktor 4 so stark ist, dass er die Klemmverbindung zwischen der Schraube 11 und dem Abschnitt 3a lösen und den Überrollkörper in seine ausgefahrene Position katapultieren kann. Die Endstellung ist in Fig. 5 gezeigt. Damit der Überrollkörper bei dem Ausfahrvorgang nicht aus den Führungen 5 gezogen wird, sind die Bügelrohre 1, 2 mit einem Anschlagmechanismus, vorzugsweise in Form von Hohlbolzen 10, ausgestattet. Diese werden in Durchgänge in den Bügelrohren 1, 2 eingesetzt und stehen von der Umfangsoberfläche der Bügelrohre 1, 2 vor, wodurch verhindert wird, dass die Bügelrohre aus den Führungen 5 gezogen werden können. Darüber hinaus kann der Anschlagmechanismus 10 so stark dimensioniert sein, dass der ausgefahrene Überrollbügel als Abschleppmöglichkeit durch Befestigen eines Abschlepphakens verwendet werden kann.

Für eine Verriegelung des ausgefahrenen Überrollkörpers dienen die Verriegelungsmechanismen in beiden Führungen 5. Es ist aber auch denkbar, dass nur in einer Führung ein Verriegelungsmechanismus vorgesehen ist. Wird nach Ansteuerung des pyrotechnischen Aktors 4 durch einen Crashsensor der Überroilkörper nach oben beschleunigt, werden die Keile 7 aufgrund der zwischen ihnen und den Bügelrohren 1, 2 entstehenden Reibungskraft entgegen der Federkraft der Federmittel 8 in einen oberen breiteren Bereich des sich nach unten verjüngenden Abschnittes bewegt, womit sich die Bügelrohre in der Ausfahrrichtung, d. h. in ihrer Längsrichtung nach oben, bewegen können. Nachdem die ausgefahrene Stellung vollständig erreicht worden ist, drücken die Federmittel 8 die Keile 7 nach unten in den sich verjüngenden Abschnitt zwischen der Hülse 6 und dem Bügelrohr 1, 2. Wird in dieser Stellung Kraft auf den Überrollkörper von oben ausgeübt, werden die Keile 7 aufgrund der Reibungskraft zwischen ihnen und dem Bügelrohr 1, 2 weiter in den sich verjüngenden Abschnitt gedrückt, mit der Folge, dass die Bügelrohre 1, 2 durch das Zusammenwirken der Keile mit der sich verjüngenden Hülse 6 in den Führungen 5 festgeklemmt werden. Durch die komplementären Flächen der Keile 7 und des Bügelrohres 1, 2 wird eine für die Verriegelung des Überrollkörpers benötigte Klemmkraft auf das Bügelrohr zuverlässig übertragen. Der vorher erwähnte Spalt zwischen den Keilen 7 ist für die erläuterte Funktionsweise notwendig, damit die Keile 7 das Bügelrohr verklemmen können, ohne sich gegenseitig an einem weiteren Eindringen in den sich verjüngenden Abschnitt zu blockieren. Ein Einfahren des Überrollkörpers ist folglich nicht mehr möglich. Es sei an dieser Stelle erwähnt, dass, gleichgültig in welcher Stellung der Überrollbügel steht, kein Einfahren des Bügels mehr möglich ist und in jeder Stellung der Überrollkörper sicher verriegelt ist. Die Verriegelungsstellungen sind also stufenlos.

Außerdem ist es nie möglich, dass die Keile 7, z. B. bei einem Mehrfachüberschlag, aufgrund der entstehenden Fliehkräfte in den oberen breiteren Bereich des sich verjüngenden Abschnittes gedrückt werden und somit ihre Wirkung verlieren, weil das Federelement 8 dafür sorgt, dass die Keile zuverlässig an ihrem Wirkungsort bleiben.

Die Verriegelungswirkung wird durch die Reibung zwischen den Bügelrohren 1, 2 und den Keilen 7 bzw. zwischen den Keilen 7 und dem sich verjüngenden Element 6 beeinflusst. Die zwischen den Elementen des Verriegelungsmechanismus auftretende Reibung wird sowohl durch die gewählte Geometrie der Bügelrohre 1, 2, der Keile 7 und des sich verjüngenden Elementes 6 als auch durch die Materialwahl für die Bügelrohre 1, 2, die Keile 7 und das sich verjüngende Element 6 beeinflusst. Eine besonders bevorzugte Materialkombination zeichnet sich dadurch aus, dass der Reibungskoeffizient der Materialkombination Bügelrohr 1, 2 / Keil 7 größer ist als der Reibungskoeffizient der Materialkombination Keil 7 / sich verjüngendes Element 6. Als insbesondere bevorzugte vorteilhafte Materialkombinationen der Bügelrohre, Keile und dem sich verjüngenden Element haben sich die folgenden herausgestellt:

Bügelrohr aus Aluminium oder Magnesium und Keil aus Aluminium;

Bügelrohr aus Aluminium oder Magnesium und Keil aus Stahl;

Bügelrohr aus einem Faserverbundwerkstoff, z.B. Kohlefaser, und Keil aus Aluminium, Magnesium oder Stahl, wobei das Bügelrohr nicht zwingend vollständig aus einem Faserverbundwerkstoff gebildet sein muss, sondern von diesen auch nur ummantelt sein kann.

Das sich verjüngende Element 6 kann bei allen obigen vorteilhaften Kombinationen entweder aus Stahl oder einer oberflächengehärteten Aluminiumlegierung gebildet sein. Die oberflächengehärtete Aluminiumlegierung kann z.B. durch Anodisieren hergestellt werden.

Die oben dargestellten Materialkombinationen sind aber nur beispielhaft zu verstehen und es kann jede andere Kombination, die sich als vorteilhaft herausstellt, verwendet werden.

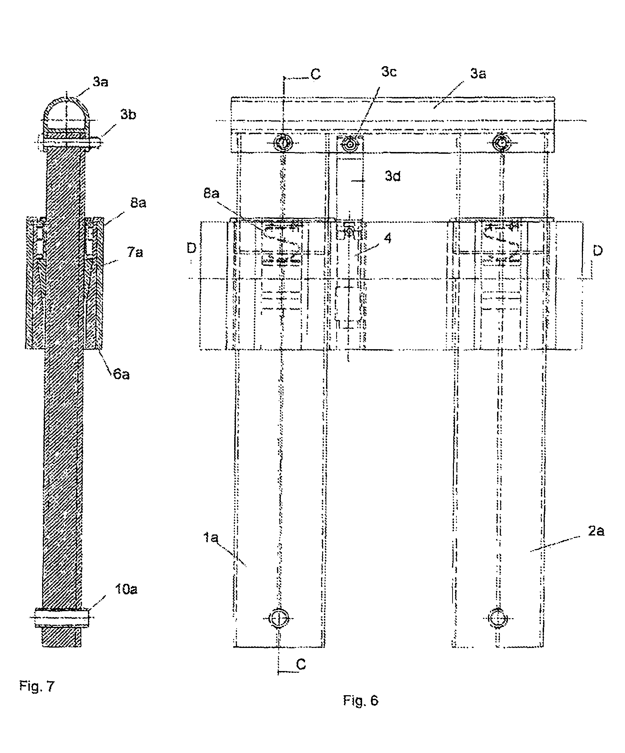

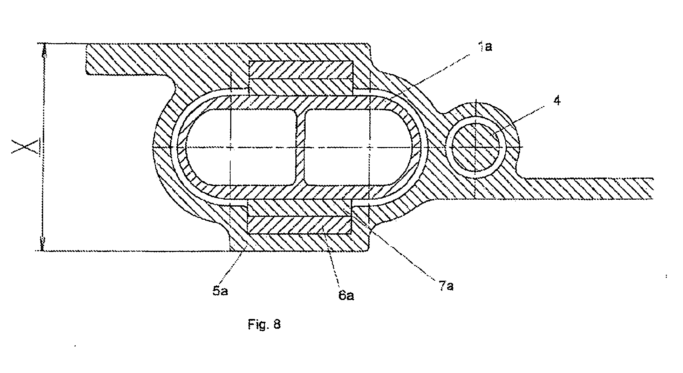

Unter Bezug auf die Fig. 6 bis 9 wird eine zweite bevorzugte Ausführungsform der Erfindung erläutert. In Fig. 6 ist eine Phantomzeichnung eines Überrollbügels gemäß einer zweiten bevorzugten Ausführungsform der Erfindung dargestellt. Bei diesem Überrollbügel ist der Überrollkörper wiederum aus zwei Bügelrohren 1a, 2a und einem Querbügel 3a gebildet, wobei die Bügelrohre 1a, 2a einen im Wesentlichen rechteckigen bzw. ovalen Querschnitt, wie in der Schnittansicht aus Fig. 8 erkennbar, aufweisen. Fig. 7 ist eine Schnittansicht entlang der in Fig. 6 gezeigten Schnittlinie C-C, woraus hervorgeht, dass der Querbügel 3a einen halbkreisförmigen Querschnitt aufweist und mittels Schrauben 3b mit den Bügelrohren 1a, 2a verbunden ist. An dem Querbügel 3a ist ebenfalls über eine Schraube 3c der mit dem Aktor 4 wirkende Abschnitt 3d befestigt. Der Abschnitt 3d muss also nicht zwingend in den Querbügel wie in der ersten Ausführungsform integriert sein.

Aus Fig. 6 in Verbindung mit Fig. 7 ist ersichtlich, dass das Federelement 8a in diesem Fall eine Blattfeder ist und keine Schraubenfeder.

Außerdem sind in dieser Ausführungsform die Keile 7a und das sich verjüngende Element 6a nicht gebogen ausgebildet, wodurch sich deren Herstellung vereinfacht, aber deren Funktion die gleiche bleibt.

In Fig. 8 wird eine Schnittansicht entlang der Schnittlinie D-D aus Fig. 6 dargestellt. Hieraus ist ersichtlich, dass sowohl die Keile 7a als auch das sich verjüngende Element 6a platten- bzw. leistenartig ausgebildet sind und an der Längsseite des im Wesentlichen rechteckigen bzw. ovalen Querschnittes des Bügelrohres 1a, 2a angeordnet sind. Bei dem sich verjüngenden Element 6a muss es sich folglich nicht wie bei der ersten Ausführungsform um eine Hülse handeln, sondern kann, wie erwähnt, platten- bzw. leistenartig sein.

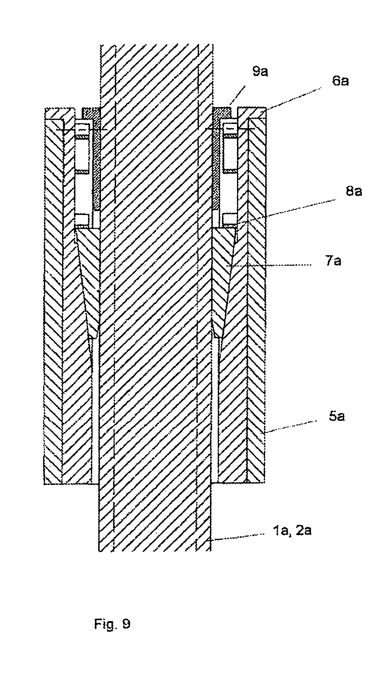

Unter Bezug auf Fig. 9, die eine vergrößerte Darstellung des in Fig. 7 gezeigten Verriegelungsmechanismus ist, weist das sich verjüngende Element 6a an seinem oberen Ende einen rechten Winkel auf, wodurch es in der Führung 5a gehalten wird. Es ist aber ebenso möglich, das sich verjüngende Element 6a mittels Schrauben mit der Führung 5a zu verbinden oder das sich verjüngende Element 6a direkt auf der Innenoberfläche der Führung 5a zu bilden.

Vorteilhaft bei diesem Gesamtaufbau ist, dass das Abmaß X dieser Konstruktion, wie in Fig. 8 gezeigt, sehr gering und folglich die Konstruktion sehr platzsparend ist.

Unter Bezug auf Fig. 9, die eine vergrößerte Darstellung des Verrieglungsmechanismus zeigt, ist die Funktionsweise des Verriegelungsmechanismus die gleiche wie die der ersten Ausführungsform. Wird der Aktor 4 angesteuert, werden die Bügelrohre 1a, 2a in Ausfahrrichtung beschleunigt, wodurch die Keile 7a gegen die Federkraft des Federelementes 8a bewegt werden und der Überrollkörpers, ohne blockiert zu werden, ausgefahren werden kann. Erreicht der Überrollkörper seine Endposition, d. h. die Hohlbolzen 10a kommen in Anschlag, werden die Keile 7a in den sich verjüngenden Abschnitt zwischen den Bügelrohren 1a, 2a und den Elementen 6a gedrückt. Wird Kraft auf den Überrollkörper in Einfahrrichtung ausgeübt, werden die Keile 7a aufgrund der Reibungskraft zwischen ihnen und den Bügelrohren weiter in den sich verjüngenden Abschnitt gedrückt und der Überrollkörper durch Klemmwirkung festgestellt. Die Klemmkraft wird, wie in der ersten Ausführungsform, ebenfalls über die dem Bügelrohr zugewandte mit der Bügelrohroberfläche komplementäre Keilfläche zuverlässig übertragen. Bevorzugte Materialkombinationen der Bügelrohre 1a, 2a, der Keile 7a und der sich verjüngenden Elemente 6a sind die gleichen wie in der ersten bevorzugten Ausführungsform.

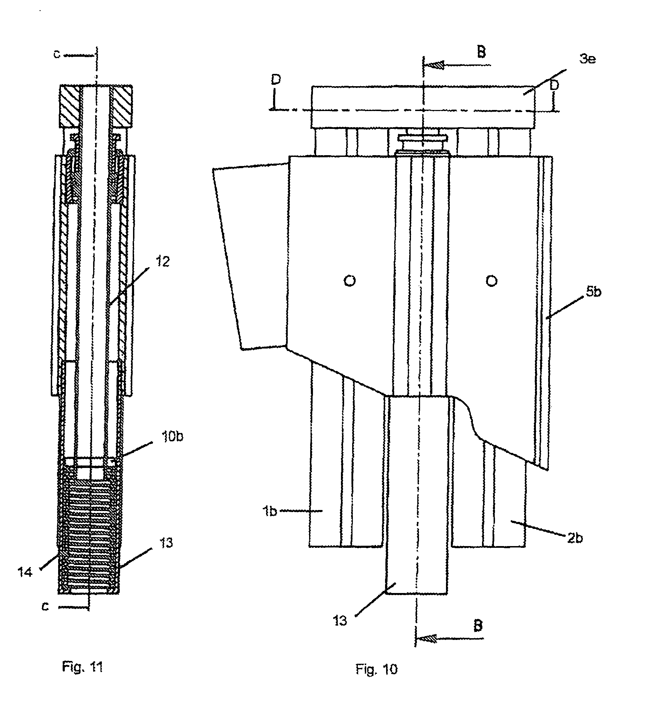

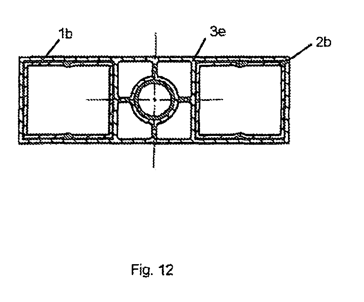

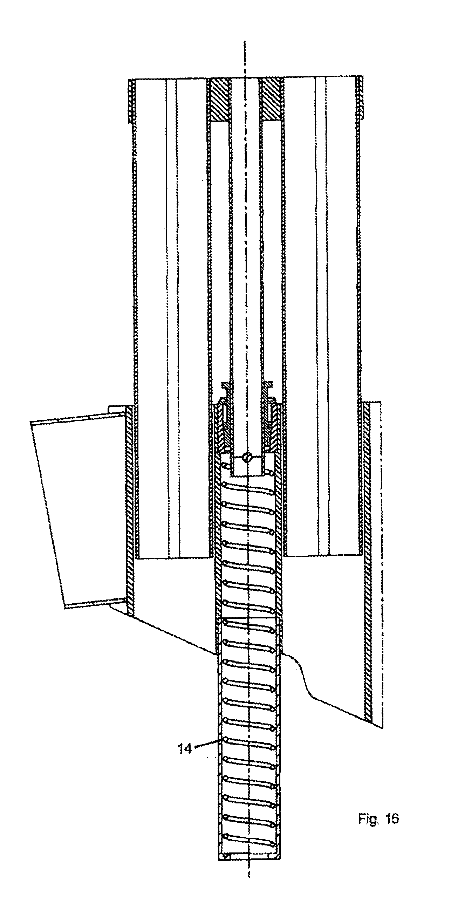

Im Folgenden wird eine dritte bevorzugte Ausführungsform unter Bezug auf die Figuren 10 bis 16 erläutert werden. In Fig. 10 ist der erfindungsgemäße Überrollbügel in seiner Grundstellung dargestellt. Dieser umfasst ebenfalls zwei Bügelrohre 1b, 2b und einen Querbügel 3e. Die Bügelrohre 1b, 2b sind in dieser Ausführungsform mit einem rechteckigen Hohlquerschnitt ausgebildet, wobei der Querbügel 3e Aussparungen zur Aufnahme dieser Querschnitte aufweist. Fig. 12 zeigt eine Schnittansicht entlang der in Fig. 10 gezeigten Schnittlinie D-D, die die Aussparungen des Querbügels 3e zur Aufnahme der Bügelrohre 1b, 2b zeigt. Die Querschnitte der Bügelrohre 1b, 2b sind aber nicht auf rechteckige Querschnitte beschränkt, sondern können beliebige Querschnitte, wie z.B. die in der ersten und zweiten Ausführungsform, aufweisen.

Unter nochmaligem Bezug auf Fig. 10 weist der Überrollbügel der dritten bevorzugten Ausführungsform ebenfalls eine Führung 5b auf, mit der der gesamte Überrollbügel mit einem Fahrzeug verbunden wird. Unterschiedlich zu den vorhergehenden Ausführungsformen ist, dass der Verriegelungsmechanismus nicht an den Bügelrohren 1b, 2b gebildet ist, sondern ein zusätzliches Antriebsrohr, das im ausgefahrenen Zustand verriegelt wird, an dem Querbügel 3b befestigt ist.

In Fig. 11 ist eine Schnittansicht entlang der in Fig. 10 gezeigten Schnittlinie B-B dargestellt. Das zusätzliche Antriebsrohr 12 wird, wie gezeigt, einerseits mit dem Querbügel 3b verbunden und durch die Führung 5b hindurch geführt. Am unteren Ende der Führung 5b ist eine Aufnahmevorrichtung 13 gebildet, die entweder mit der Führung 5b verschraubt oder direkt an der Führung 5b gebildet ist. diese Aufnahmevorrichtung dient zur Aufnahme eines Energiespeichers, z.B. in Form einer Feder 14. Damit die Feder 14 im Crashfall Kraft auf das Antriebsrohr 12 übertragen kann, ist in das Antriebsrohr 12 ein Bolzen 10b eingesetzt. Der Verriegelungsmechanismus in dieser bevorzugten Ausführungsform ist der gleiche wie in der ersten oder zweiten bevorzugten Ausführungsform und wird deshalb an dieser Stelle nicht wiederholt werden. Bevorzugte Materialkombinationen des Antriebsrohres und der Elemente des Verriegelungsmechanismus sind die gleichen wie in der ersten und zweiten bevorzugten Ausführungsform.

In der in Fig. 12 gezeigten Schnittansicht in Verbindung mit Fig. 11 wird ersichtlich, dass das Antriebsrohr 12 mit dem Querbügel 3e über eine Klemmverbindung verbunden ist. Vorteilhaft hierbei ist, dass die Aussparung in dem Querbügel ebenfalls wie die Aussparung für die Bügelrohre 1b, 2b in einem Strangpressverfahren hergestellt werden kann. Weiterhin können diese Verbindungen durch jegliche andere Kraftschlussverfahren oder Stoff- bzw. Formschlussverfahren gebildet werden.

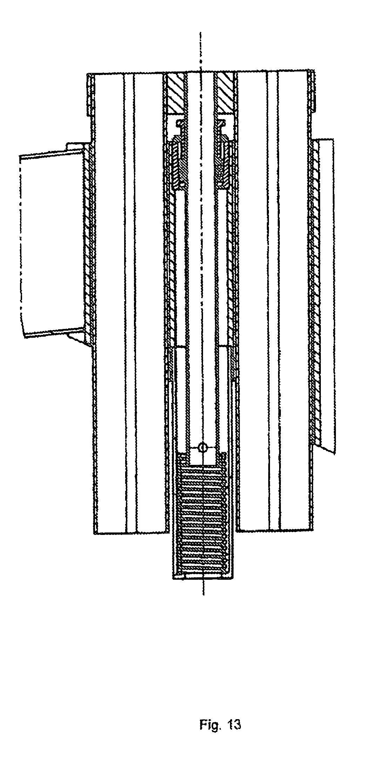

Fig. 13 zeigt den gesamten Überrollbügel der dritten bevorzugten Ausführungsform in einer Schnittansicht entlang der in Fig. 11 gezeigten Schnittlinie C-C.

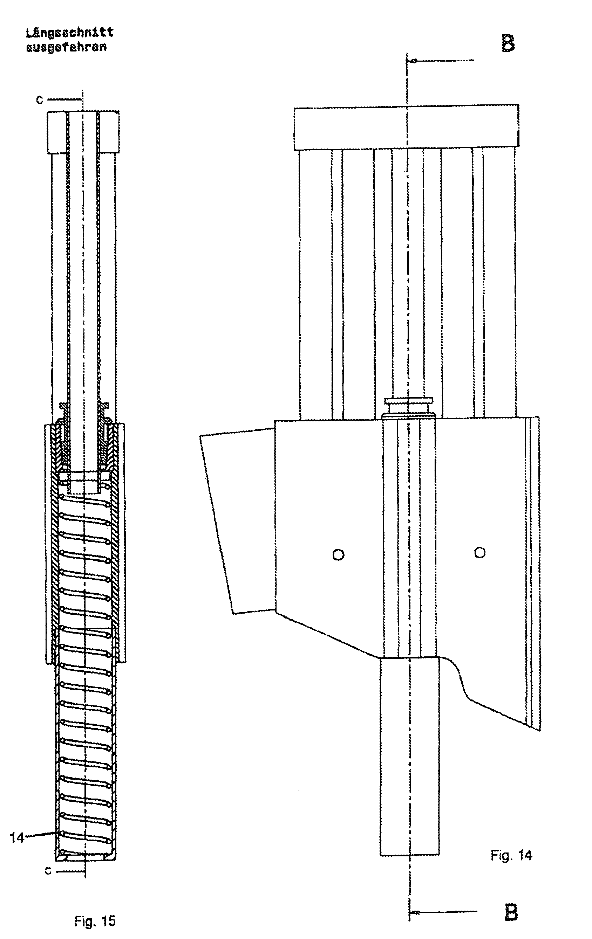

Die Fig 14 bis 16 zeigen den Überrollbügel der Fig. 10, 11 und 13 in einem ausgefahrenen Zustand. Dieser wird durch Auslösung der Druckfeder 14 über einen nicht gezeigten Auslösemechanismus erreicht. Der Überrollbügel kann aber auch durch einen pyrotechnischen Aktor wie in den vorhergehenden Ausführungsformen ausgefahren werden. Umgekehrt ist das Ausfahren mittels einer Feder, die durch einen Auslösemechanismus entsperrt wird, in den anderen Ausführungsformen auch möglich. Die Auslösemechanismen können beispielsweise hydraulisch, pyrotechnisch oder elektromagnetisch betrieben sein.

Wie aus dem Vorherigen verständlich, können die Elemente des Überrollkörpers, d. h. die Bügelrohre 1, 2, 1a, 2a, bzw. 1b, 2b und der Querbügel 3, 3a, bzw. 3e beliebige Querschnitte aufweisen und aus einem beliebigen Material, das die benötigten mechanischen Eigenschaften aufweist, gebildet sein. Nicht abschließende Beispiele hierfür sind eckige, kreisförmige oder runde Querschnitte, bzw. Hohlquerschnitte, die z. B. im Strangpressverfahren hergestellt wurden.

Ebenfalls können die Elemente des Verriegelungsmechanismus beliebig ausgestaltet sein, wobei die Keile an einem beliebigen Abschnitt des Außenumfangs der Bügelrohre angeordnet sein können. Für eine richtige Funktionsweise ist es ausreichend in dem Verriegelungsmechanismus nur einen einzigen Keil zu verwenden, vorzugsweise sind aber mehrere vorzusehen. Weiterhin können die Keile und der sich verjüngende Abschnitt einen beliebigen Querschnitt aufweisen und das Federelement durch verschiedene Federtypen verkörpert sein. Außerdem können die Elemente des Verriegelungsmechanismus aus verschiedenen Materialien, wie z. B. Metall, Metalllegierungen oder einem die benötigten mechanischen Eigenschaften aufweisenden Kunststoff hergestellt sein.

Der Verriegelungsmechanismus ist in allen Ausführungsformen um die Bügelrohre herum angeordnet, es ist aber ebenfalls möglich, diesen auf der Innenseite der Hohlquerschnitte der Bügelrohre vorzusehen.

Für ein Lösen und Wiedereinfahren des Überrollkörpers müssen die Keile mit einem Spezialwerkzeug von unten durch den Spalt, der zwischen dem Bügelrohr und dem sich verjüngenden Element gebildet ist, gegen die Federkraft des Federelementes nach oben gedrückt werden, wodurch sich die Verriegelung des Überrollbügels löst.

Wie aus dem Obigen ersichtlich, kann ein Überrollbügel, der einen Überrollkörper zuverlässig in jeder Stellung nur durch Bildung eines Kraftschlusses in dem Verriegelungsmechanismus verriegelt, geschaffen werden.

## Patentansprüche

1. Überrollschutz, welcher umfasst:
einen Überrollkörper (1, 2, 3),
eine Führung (5),
eine Ausfahrvorrichtung (4) zum Ausfahren des Überrollkörpers, wobei der Überrollkörper in der Führung zwischen einer eingefahrenen Position und einer ausgefahrenen Position verstellbar und durch die Ausfahrvorrichtung in die ausgefahrene Position ausfahrbar ist, und eine Verriegelungsvorrichtung mit mindestens einem Klemmelement (7), wobei der Überrollkörper durch die Verriegelungsvorrichtung durch einen Kraftschluss zwischen dem Überrollkörper und dem Klemmelement verriegelbar ist, **dadurch gekennzeichnet, dass** das Klemmelement und der Überrollkörper komplementäre Flächen aufweisen, wobei das Klemmelement ein Keil (7) ist und die Verriegelungsvorrichtung einen in Einfahrrichtung sich verjüngenden Abschnitt zur Aufnahme des Keils aufweist, wobei bei Belastung des Überrollkörpers in Einfahrrichtung aufgrund der zwischen dem Überrollkörper und dem Keil wirkenden Reibungskraft eine Klemmkraft über die komplementären Flächen derart auf den Überrollkörper übertragen wird, dass der Überrollkörper durch den Kraftschluss verriegelt ist.

2. Überrollschutz gemäß Anspruch 1, **dadurch gekennzeichnet, dass** der sich verjüngende Abschnitt durch eine in dem Verriegelungsmechanismus angeordnete sich in der Stärke verändernde Platte (6a) ausgebildet ist.

3. Überrollschutz gemäß Anspruch 1, **dadurch gekennzeichnet, dass** der sich verjüngende Abschnitt durch eine im Verriegelungsmechanismus angeordnete sich konisch verjüngende Hülse (6) ausgebildet ist.

4. Überrollschutz gemäß einem der vorhergehenden Ansprüche, **dadurch gekennzeichnet, dass** mehrere Keile (7) in den sich verjüngenden Abschnitt eingesetzt sind.

5. Überrollschutz gemäß einem der vorhergehenden Ansprüche, **dadurch gekennzeichnet, dass** der mindestens eine Keil (7) durch ein Federelement (8) in den sich verjüngenden Abschnitt gedrückt wird.

6. Überrollschutz gemäß einem der vorhergehenden Ansprüche, **dadurch gekennzeichnet, dass** der Überrollkörper aus mindestens einem Bügelelement (1) und einem Querbügel (3) gebildet ist.

7. Überrollschutz gemäß einem der vorhergehenden Ansprüche, **dadurch gekennzeichnet, dass** die Ausfahrvorrichtung (4) ein pyrotechnischer Aktor ist.

8. Überrollschutz gemäß einem der vorhergehenden Ansprüche, **dadurch gekennzeichnet, dass** der Verriegelungsmechanismus in der Führung (5) vorgesehen ist.

9. Überrollschutz gemäß einem der vorhergehenden Ansprüche, **dadurch gekennzeichnet, dass** das Klemmelement (7) aus Aluminium und der Überrollkörper aus Aluminium oder Magnesium gebildet ist.

10. Überrollschutz gemäß einem der vorhergehenden Ansprüche, **dadurch gekennzeichnet, dass** der Überrollkörper aus Aluminium oder Magnesium gebildet ist und das Klemmelement (7) aus Stahl gebildet ist.

11. Überrollschutz gemäß einem der Ansprüche 8 bis 10, **dadurch gekennzeichnet, dass** das Bügelelement aus Kohlefaser gebildet ist.

12. Überrollschutz gemäß einem der Ansprüche 3 bis 11, **dadurch gekennzeichnet, dass** die in dem Verriegelungsmechanismus angeordnete Platte (6a) oder die in Verriegelungsmechanismus angeordnete sich konisch verjüngende Hülse (6) aus Stahl oder einer oberflächengehärteten Aluminiumlegierung besteht.

13. Überrollschutz gemäß einem der Ansprüche 2 bis 12, **dadurch gekennzeichnet, dass** der Winkel des Keils und der Winkel des sich verjüngenden Abschnittes nicht gleich groß sind.

14. Überrollschutz gemäß einem der vorhergehenden Ansprüche, **dadurch gekennzeichnet, dass** ein weiteres Bügelelement (12) vorgesehen ist, das durch die Verriegelungsvorrichtung in der ausgefahrenen Position verriegelbar ist.

## Claims

1. Anti-roll guard, which comprises:
an anti-roll body (1, 2, 3),
a guide (5),
an extension device (4) for extending the anti-roll body, in which the anti-roll body may be adjusted in the guide between a retracted position and an extended position and may be extended into the extended position through the extension device, and a locking device with at least one clamping element (7), in which the anti-roll body may be locked through the locking device through a frictional connection between the anti-roll body and the clamping element, **characterised in that** the clamping element and the anti-roll body have complementary surfaces, in which the clamping element is a wedge (7) and the locking device has a section to take the wedge, which narrows in the direction of retraction, in which with the anti-roll body under stress in the direction of retraction because of the force of friction acting between the anti-roll body and the wedge a clamping force is transferred through the complementary surfaces onto the anti-roll body in such a way that the anti-roll body is locked through the frictional connection.

2. Anti-roll guard according to claim 1, **characterised in that** the narrowing section is formed by a plate (6a) arranged in the locking mechanism, which changes in size.

3. Anti-roll guard according to claim 1, **characterised in that** the narrowing section is formed by a sleeve (6) arranged in the locking mechanism, which narrows conically.

4. Anti-roll guard according to one of the previous claims, **characterised in that** several wedges (7) are inserted into the narrowing section.

5. Anti-roll guard according to one of the previous claims, **characterised in that** at least one wedge (7) will be pressed into the narrowing section through a spring element (8).

6. Anti-roll guard according to one of the previous claims, **characterised in that** the anti-roll body is made up of at least one bar element (1) and a cross bar (3).

7. Anti-roll guard according to one of the previous claims, **characterised in that** the extension device (4) is a pyrotechnic actuator.

8. Anti-roll guard according to one of the previous claims, **characterised in that** the locking mechanism is provided in the guide (5).

9. Anti-roll guard according to one of the previous claims, **characterised in that** the clamping element (7) is made of aluminium and the anti-roll body is made of aluminium or magnesium.

10. Anti-roll guard according to one of the previous claims, **characterised in that** the anti-roll body is made of aluminium or magnesium and the clamping element (7) is made of steel.

11. Anti-roll guard according to one of claims 8 to 10, **characterised in that** the bar element is made of carbon fibre.

12. Anti-roll guard according to one of claims 3 to 11, **characterised in that** the plate (6a) arranged in the locking mechanism or the conically narrowing sleeve (6) arranged in the locking mechanism is made of steel or a surface hardened aluminium alloy.

13. Anti-roll guard according to one of claims 2 to 12, **characterised in that** the angle of the wedge and the angle of the narrowing section are not the same size.

14. Anti-roll guard according to one of the previous claims, **characterised in that** a further bar element (12) is provided, which may be locked in the extended position through the locking device.

## Revendications

1. Système de protection contre les tonneaux comportant :
➢ un arceau (1, 2, 3),
➢ une glissière (5),
➢ un dispositif de sortie (4) pour le déploiement de l'arceau, 1 l'arceau étant déplaçable dans la glissière entre une position rentrée et une position déployée et pouvant être déployé dans la position déployée avec le dispositif de sotie, et un dispositif de verrouillage comportant au moins un élément de serrage (7), l'arceau pouvant être verrouillé avec le dispositif de verrouillage par adhérence entre l'arceau et l'élément de serrage, **caractérisé en ce que** l'élément de serrage et l'arceau présentent des surfaces complémentaires, l'élément de serrage étant une clavette (7) et le dispositif de verrouillage présentant un tronçon, destiné à recevoir la clavette, qui se rétrécit dans le sens de la rentrée, alors qu'en cas de sollicitation de l'arceau dans le sens de la rentrée due à la force de frottement entre l'arceau et la clavette, une force de blocage est transmise à l'arceau, par l'intermédiaire des surfaces complémentaires, de manière que l'arceau soit verrouillé par adhérence.

2. Système de protection contre les tonneaux selon la revendication 1, **caractérisé en ce que** le tronçon qui se rétrécit est formé par une plaque (6a) disposée dans le mécanisme de verrouillage et dont l'épaisseur change.

3. Système de protection contre les tonneaux selon la revendication 1, **caractérisé en ce que** le tronçon qui se rétrécit est formé par un manchon (6) disposé dans le mécanisme de verrouillage et qui se rétrécit en forme de cône.

4. Système de protection contre les tonneaux selon l'une quelconque des revendications précédentes, **caractérisé en ce que** plusieurs clavettes (7) sont utilisées dans le tronçon qui se rétrécit.

5. Système de protection contre les tonneaux selon l'une quelconque des revendications précédentes, **caractérisé en ce qu'**au moins une clavette (7) est utilisée dans le tronçon qui se rétrécit.

6. Système de protection contre les tonneaux selon l'une quelconque des revendications précédentes, **caractérisé en ce que** l'arceau est constitué d'au moins un élément d'arceau (1) et d'un étrier transversal (3).

7. Système de protection contre les tonneaux selon l'une quelconque des revendications précédentes, **caractérisé en ce que** le dispositif de sortie (4) est un actionneur pyrotechnique.

8. Système de protection contre les tonneaux selon l'une quelconque des revendications précédentes, **caractérisé en ce que** le mécanisme de verrouillage est prévu dans la glissière (5).

9. Système de protection contre les tonneaux selon l'une quelconque des revendications précédentes, **caractérisé en ce que** l'élément de blocage (7) est en aluminium et l'arceau en aluminium ou en magnésium.

10. Système de protection contre les tonneaux selon l'une quelconque des revendications précédentes, **caractérisé en ce que** l'arceau est en aluminium ou en magnésium et l'élément de blocage (7) en acier.

11. Système de protection contre les tonneaux selon l'une quelconque des revendications 8 à 10, **caractérisé en ce que** l'élément d'arceau est en fibres de carbone.

12. Système de protection contre les tonneaux selon l'une quelconque des revendications 3 à 11, **caractérisé en ce que** la plaque (6a) disposée dans le mécanisme de verrouillage ou le manchon (6) disposé dans le mécanisme de verrouillage et qui se rétrécit en formant un cône est en acier ou un alliage d'aluminium trempé en surface.

13. Système de protection contre les tonneaux selon l'une quelconque des revendications 2 à 12, **caractérisé en ce que** l'angle de la clavette et l'angle du tronçon qui se rétrécit ne sont pas de la même taille.

14. Système de protection contre les tonneaux selon l'une quelconque des revendications précédentes, **caractérisé en ce qu'**un autre élément d'arceau (12) est prévu et que celui-ci peut être verrouillé dans la position déployée par le dispositif de verrouillage.
